(19) **Europäisches Patentamt**
**European Patent Office**
**Office européen des brevets**

(11) **EP 4 070 651 B1**

(12) **EUROPÄISCHE PATENTSCHRIFT**

(45) Veröffentlichungstag und Bekanntmachung des Hinweises auf die Patenterteilung:
**29.01.2025   Patentblatt 2025/05**

(21) Anmeldenummer: **22160721.1**

(22) Anmeldetag: **08.03.2022**

(51) Internationale Patentklassifikation (IPC):
**A01J 25/11** *(2006.01)*      **A23C 19/024** *(2006.01)*

(52) Gemeinsame Patentklassifikation (CPC):
**A01J 25/111; A23C 19/024; A23C 19/076**

(54) **VERFAHREN ZUR EINSTELLUNG DES TROCKENMASSEGEHALTS VON KONZENTRATEN BEI DER QUARKHERSTELLUNG UND VORRICHTUNG ZUR AUSFÜHRUNG DES VERFAHRENS**

METHOD FOR ADJUSTING THE DRY MATTER CONTENT OF CONCENTRATES IN QUARK PRODUCTION AND DEVICE FOR CARRYING OUT THE METHOD

PROCÉDÉ DE RÉGLAGE DE LA TENEUR EN MATIÈRE SÈCHE DES CONCENTRÉS DANS LA FABRICATION DE QUARK ET DISPOSITIF DESTINÉ À LA MISE EN  UVRE DU PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **31.03.2021   DE 102021108269**

(43) Veröffentlichungstag der Anmeldung:
**12.10.2022   Patentblatt 2022/41**

(73) Patentinhaber: **GEA Westfalia Separator Group GmbH**
**59302 Oelde (DE)**

(72) Erfinder:
• **BUSSMANN, Daniel**
**59302 Oelde (DE)**

• **BEICK, Lennart**
**33604 Bielefeld (DE)**
• **VEER, Thomas**
**49832 Beesten (DE)**
• **WITTELMANN, Kai**
**59302 Oelde (DE)**

(74) Vertreter: **Specht, Peter et al**
**Loesenbeck - Specht - Dantz**
**Patent- und Rechtsanwälte**
**Am Zwinger 2**
**33602 Bielefeld (DE)**

(56) Entgegenhaltungen:
**EP-B1- 0 440 208**

**Beschreibung**

Die vorliegende Erfindung betrifft ein Verfahren zur Einstellung des Trockenmassegehalts von Konzentraten bei der Quarkherstellung, sowie eine entsprechend ausgerüstete Vorrichtung mit einem Düsenseparator.

Aus der DE 10 2004 035 215 A1 ist ein Verfahren bekannt, in welchem eine konstante Zulaufmenge vorgegeben wird. Wird im Quark durch stichprobenartige Messung eine Schwankung des Trockenmassegehaltes ermittelt, so wird die Zulaufmenge manuell angepasst.

Weiter ist aus der EP 0 440 208 B1 ein Verfahren zur Regelung der Herstellung von Frischkäse mit Doppelrahmstufe bekannt. Hier erfolgt eine Messung an der Ableitung der Molke. Anders als bei Quarkherstellung stellt bei Frischkäse allerdings die Molke die schwere Phase dar. Es erfolgt somit auch hier eine Massenstrombestimmung der schweren Phase. Die Trockenmassebestimmung erfolgt ebenfalls durch Messung der schweren Phase, welche hier die Molke ist und im Fall der Quarkherstellung der Quarkfraktion entspricht.

Weiter ist die DE 32 38 462 A1 bekannt. Hier wird die Menge pro Zeiteinheit an hergestellten Rahm gemessen und entsprechend die Zulaufleistung angepasst.

Die DD 2 77 583 A3 offenbart eine Trockenmasseermittlung durch die Messung des Leitwerts. Hierbei wird mit einer Recheneinheit der Trockensubstanzgehalt anhand eines Leitwerts des Quarks nach einem Quarktrichter ermittelt. Problematisch daran ist, dass eine Änderung der Zulaufmenge eine hohe Totzeit bis zur Detektion aufweist. Die Messung des Trockenmasse-Zulaufs erfolgt dabei im Labor und wird als konstant vorausgesetzt. Weiterhin ist die Leitfähigkeitsmessung abhängig von dem pH-Wert und dem Fettgehalt des zu ermittelnden Mediums. Daher müssen diese Werte bekannt sein oder zusätzlich ermittelt werden.

Ein gattungsgemäßes Verfahren zur Einstellung des Trockenmassegehalts von Frischkäse, insbesondere von Quark, ist aus zudem aus der DE 10 2004 035 215 A1 bekannt. Dieses Verfahren beruht auf einer Druckmessung, wobei ein entsprechender Drucksensor bzw. Messaufnehmer in der Ableitung der schweren Phase vor einer Kühlvorrichtung angeordnet ist. Die Druckmessung dient dabei als Regelgröße zur Einstellung einer Zulaufleistung des Anfangsproduktes in den Separator.

Der Unterschied zwischen Frischkäse und Quark ist allgemein bekannt. Grundsätzlich gilt, dass Quark eine spezielle Form von Frischkäse ist. Für diese Anmeldung kann der Unterschied darauf reduziert werden, dass bei der Zentrifugation von Quark die Molke die leichte Phase ist. Bei der Zentrifugation von Frischkäse ist die Molke dagegen die schwere Phase. Dies kann ganz allgemein durch den unterschiedlichen Fettgehalt der jeweils anderen Phase erklärt werden.

Die Trockenmasse (nachfolgend TM) des produzierten Quarks ist maßgeblich von der TM der Kesselmilch, der Molke, der Düsenbestückung des Separators und der Zulaufmenge zum Separator abhängig. Dabei gilt die Faustregel, dass eine größere Zulaufmenge in einer höheren TM des Quarks resultiert.

Das Überprüfen der Trockenmasse der Milch und Molke sowie die Messung der Trockenmasse des Quarks erfolgt im Regelfall über Probenentnahme und Analyse mittels Schnellmethode, wie dies als Stand der Technik bereits in der DE 10 2004 035 215 A1 eingeführt wurde. Die Analyse des TM-Gehalts bei diesen Stichproben weist eine Toleranz von mindestens $\pm 0,1\%$ auf.

Durch die Bestimmung der Trockenmasse erst im Endprodukt (Quark-Konzentrat) kann allerdings nur verzögert in den Prozess eingegriffen werden. Es kommt somit zu einer ungewünschten Abweichung im Endprodukt, bevor durch die Veränderung der Zulaufmenge gegengesteuert werden kann. Hinzu kommt, dass eine Totzeit zur Konzentration des Produkts in der Separatorentrommel in der Regelung berücksichtigt werden muss, der Regler dementsprechend langsam eingestellt werden muss. Bei einem hierzu durchgeführten Versuch lag die Zeitverzögerung der Regelung bei etwa 3 Minuten.

Ausgehend von der vorgenannten Problemstellung ist es Aufgabe der vorliegenden Erfindung ein Verfahren bereitzustellen, welches eine schnellere und damit exaktere Einstellung des Trockengehalts bei der Quark-Herstellung erlaubt.

Die vorliegende Erfindung löst die vorgenannte Aufgabe durch ein Verfahren mit den Merkmalen des Anspruchs 1 und in konstruktiver Art und Weise durch eine Vorrichtung mit den Merkmalen des Anspruchs 8.

Ein erfindungsgemäßes Verfahren zur Einstellung des Trockenmassegehaltes in Quark erfolgt mittels einer Vorrichtung zur zentrifugalen Trennung eines Ausgangsstoffes in Quark und Molke. Kernbestandteil der Vorrichtung ist ein Düsenseparator. Weiter zur Vorrichtung können z.B. Zulauf- und Ablaufleitungen gehören, sowie eines oder mehrere Messgeräte, Regelorgane und/oder eine Steuer- und/oder Auswerteeinheit.

Das erfindungsgemäße Verfahren weist zumindest die folgenden Schritte auf:

a. Zuleiten des Ausgangsprodukts in einen Düsenseparator der Vorrichtung über eine Zulaufleitung unter Ermittlung eines Gehaltes der Trockenmasse und/oder des Eiweißes und Ermittlung, insbesondere Messung, des Massenstromes des Ausgangsproduktes;
Als Ausgangsprodukt kann z.B. eine Magermilch genutzt werden. Die Ermittlung der Trockenmasse und/oder des Gehaltes an Eiweiß im Ausgangsprodukt kann z.B. durch eine Mikrowellenmessung oder durch eine Infrarot-Messung, insbesondere NIR-Messung (Nahinfrarot-Messung) erfolgen. Entsprechende Inline-Messgeräte sind bekannt, welche eine Messung ohne gesonderte Probennahme unmittelbar in einer Zulaufleitung oder in einer Bypassrohrleitung der Zulaufleitung messen. Eine Ermittlung durch Stichprobennahme ist ebenfalls möglich, allerdings weniger bevorzugt.

b. Zentrifugale Trennung des Ausgangsstoffes durch den Düsenseparator in eine Molkefraktion und eine Quarkfraktion;

Zur zentrifugalen Trennung wird ein Düsenseparator eingesetzt. Während eine Reihe von Anwendungen einen Zweiphasen-Separator bevorzugen, hat sich im vorliegenden Anwendungsfall ein Düsenseparator als wesentlich effizienter erwiesen.

c. Getrenntes Ableiten der Molkefraktion und der Quarkfraktion aus dem Düsenseparator und Ermittlung, insbesondere Messung, des Massenstromes der Molkefraktion;

Sodann erfolgt zur Erstellung einer Massenbilanz im Zuge der Einstellung des Trockenmassegehalts des Quarks eine Ermittlung des Massenstromes der Molkefraktion. Dabei wird davon ausgegangen, dass bei entsprechender Trenneffizienz des Separators der Trockenmassegehalt der Molke annähernd konstant ist, unabhängig davon wie stark der TM-Gehalt des Ausgangsproduktes schwankt. Gleiches gilt für den Eiweißgehalt.

d. Einstellen des Massenstromes an zugeleitetem Ausgangsprodukt in Abhängigkeit der in Schritt a) und c) ermittelten Werte.

Schließlich erfolgt das Einstellen des Massenstroms des zugeleiteten Ausgangsproduktes in Abhängigkeit von den ermittelten Masseströmen und dem TM-Gehalt oder Eiweißgehalt des Ausgangsprodukts. Die Abhängigkeit besteht insbesondere darin, dass die in Schritt a) bis c) ermittelten Masseströme als Regelgrö-ßen zur Einstellung des Massestroms in Schritt d) z.B. durch Einstellung des Öffnungsquerschnitts eines Zuleitungsventils der erfindungsgemäßen Vorrichtung dienen. Allerdings können auch aus dem Massestrom abgeleitete Größen als Regelgrößen benutzt werden. Dies können z.B. aus Massestrom bei bekannten physikalischen Größen des Mediums und/oder der erfindungsgemäßen, wie z.B. die Dichte und/oder die Temperatur und/oder der Rohrquerschnitt, auch der Volumendurchfluss, die Fließgeschwindigkeit und andere Prozessgrößen berechnet werden. Dem Fachmann sind die Abhängigkeiten dieser Messgrößen miteinander bekannt, und er kann auch basierend auf dem Vorgenannten verschiedene von den Masseströmen abgeleitete als Regelgrößen in Betracht ziehen.

Erfindungsgemäß erfolgt eine Ermittlung des Trockenmassegehalts oder des Eiweißgehalts der Quarkfraktion anhand des ermittelten Massenstromes des Ausgangsproduktes und des Massenstromes der Molkefraktion und des ermittelten Trockenmassegehalts oder Eiweißgehalts des Ausgangsproduktes.

Durch das erfindungsgemäße Verfahren wird insbesondere eine Minimierung der Totzeit erreicht, bei genauerer Regelung möglichst nahe an gewünschten Vorgaben, beispielsweise gesetzlichen Vorgaben oder Herstellerangaben.

Vorteilhafte Ausgestaltungen der Erfindung sind Gegenstand der Unteransprüche.

Für eine Anzeige und manuelle Überwachung der Prozessparameter ist es von Vorteil, wenn eine Ermittlung des Massenstromes der Quarkfraktion anhand des ermittelten Massenstromes des Ausgangsproduktes und des Massenstromes der Molkefraktion erfolgt.

Um eine schwankungsfreie Ermittlung eines Düsenaustrags zu gewährleisten, ist es von Vorteil, wenn dies unter Glätten des zeitlichen Verlaufs der ermittelten Werte des Düsenaustrags über Zeitraum von zumindest 20 Sekunden, vorzugsweise 30-90 Sekunden, erfolgt. Der Düsenaustrag entspricht insbesondere dem Austrag der schweren Phase aus dem Düsenseparator.

Die Zeitdifferenz zwischen der Messung des Trockenmassegehalts oder Eiweißgehalts in Schritt a und eine Einstellung der Zulaufmenge in Schritt d beträgt vorteilhaft weniger als 2 Minuten. Dadurch wird eine exaktere Einstellung des TM oder Eiweißgehalts ermöglicht, und Ausgangsprodukte mit stark schwankenden Zusammensetzungen können gut verarbeitet werden.

Erfindungsgemäß werden die Masseströme des in den Düsenseparator eingeleiteten Ausgangsproduktes und der abgeleiteten Molkefraktion, vorzugsweise kontinuierlich, als Regelgrößen ermittelt und hieraus der Massenstrom in der Ablaufleitung der Quarkfraktion berechnet wird. Dieser ermittelte Massenstrom in der Ablaufleitung kann als Wert zur Ermittlung einer Stellgröße zur automatischen, und vorzugsweise kontinuierlichen, Regelung der Zulaufmenge des Ausgangsproduktes verwendet werden. Diese Regelung erfolgt typischerweise durch ein Regelventil. Aber auch alle anderen Einrichtungen zur Einstellung einer Zulaufmenge sind denkbar.

Vorteilhaft wird das Ausgangsprodukt während der Quarkherstellung kontinuierlich dem Düsenseparator zugeführt, und es erfolgt ein kontinuierliches Abführen von Molke und Quark. Prozessunterbrechungen zur Analyse von Stichproben können dabei vorteilhaft entfallen.

Auch die Ermittlung des Trockenmassegehalts erfolgt kontinuierlich.

Ebenfalls vorteilhaft ist eine Vorrichtung zur Herstellung von Quark umfassend einen Düsenseparator und eine Steuer- und/oder Auswerteeinheit, die ausgerüstet ist zur Ausführung des erfindungsgemäßen Verfahrens. Sie weist insbesondere eine entsprechende Steuerelektronik und ein Steuersoftwareprodukt, aufgelegt auf einer Speichereinheit, auf.

Die Vorrichtung kann insbesondere über eine Zulaufleitung zur Zuleitung von Ausgangsprodukt in den Düsenseparator verfügen, sowie eine erste Ablaufleitung zur Ableitung der Molke aus dem Düsenseparator und eine zweite Ablaufleitung zur Ableitung von Quark aus dem Düsenseparator aufweisen.

Der Massenstrom der Molke kann durch ein Durchflussmessgerät, insbesondere Coriolis-Durchflussmessgerät, ermittelt werden, wobei zumindest ein Messaufnehmer des Messgerätes in oder entlang der ersten Ablaufleitung angeordnet ist.

Der Massenstrom des Ausgangsproduktes kann vorteilhaft durch ein Massedurchflussmessgerät, insbesondere Coriolis-Durchflussmessgerät, ermittelt werden, wobei zumindest ein Messaufnehmer des Messgerätes in oder entlang der Zulaufleitung angeordnet ist.

Der Trockenmassegehalt und/oder der Eiweißgehalt kann durch ein Messgerät mit einem Messaufnehmer zum Aussenden und/oder Empfangen von elektromagnetischer Strahlung, insbesondere durch eine Mikrowellen-Messung oder eine Infrarot-Messung, insbesondere NIR-Messung, ermittelt werden, wobei zumindest der Messaufnehmer des Messgerätes in oder entlang der Zulaufleitung angeordnet ist. Diese Messung ist unabhängig von schwankenden Werten in pH-Wert oder Fettgehalt.

Weiterhin erfindungsgemäß weist die Vorrichtung ein Regelorgan, insbesondere ein Regelventil, zur Einstellung der Zulaufmenge und/oder des Massenstromes des Ausgangsproduktes auf, welches entlang der Zulaufleitung angeordnet ist.

Das vorliegende Verfahren misst somit die Produktqualität kontinuierlich und stellt über den Zulauf ebenso kontinuierlich den Trockenmassengehalt des Quarks ein.

Weitere Vorteile, Merkmale und Einzelheiten der Erfindung ergeben sich aus der nachfolgenden Beschreibung, in der ein Ausführungsbeispiel der Erfindung anhand der beiliegenden Zeichnungen näher erläutert wird. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Insbesondere gibt es eine Vielzahl von Möglichkeiten, das erfindungsgemäße Verfahren zur Einstellung des Trockenmassegehalts im Rahmen der vorliegenden Erfindung abzuwandeln und weiterzubilden. Es zeigen:

Fig. 1    eine schematische Abbildung einer Vorrichtung mit einem Düsenseparator zur Durchführung des erfindungsgemäßen Verfahrens; und

Fig. 2    ein Blockdiagramm zum Verfahrensverlauf des erfindungsgemäßen Verfahrens.

Die Trockenmasse des produzierten Konzentrats an Quark Q (nachfolgend TM3) ist maßgeblich von der schwankenden Trockenmasse (TM1) des Ausgangsproduktes A abhängig und dem Massedurchflusses der leichten Molke-Phase M mit annähernd konstantem Trockenmassegehalt TM2.

Ein weiterer Faktor, welcher einen gewissen Einfluss auf die Einstellung des Trockenmassegehalten haben kann, ist die Düsenbestückung des Separators, welche allerdings im laufenden Prozess konstant ist. Ein Verstopfen der Düsen oder eine Verringerung des Düsendurchmessers kann allerdings einen gewissen Effekt haben.

Das Verstopfen von Düsen kann durch das erfindungsgemäße Verfahren detektiert werden, weil in einem solchen Fall der Massenstrom ṁ3 des Quarks proportional zur Anzahl der verstopften Düsen sinken würde.

Die Zulaufmenge ist der einzige Parameter, der während der Produktion aktiv beeinflusst werden kann, um die TM3 des Quarks zu beeinflussen. Dabei gilt die Faustregel, dass eine größere Zulaufmenge in einer höheren TM des Quark-Konzentrats resultiert.

Zur Einstellung, insbesondere zur Regulierung der Trockenmasse im Quark-Konzentrat kann anhand der Massenbilanz (Formel 1) und unter Berücksichtigung der theoretischen Durchsätze der Düsen die passende Zulaufmenge errechnet werden. Hierzu wird die Differenz aus der Ziel-Trockenmasse TM3, hier als $c_{Konzentrat}$ ausgedrückt, und der annähernd konstanten Trockenmasse TM2 der Molke, hier als $c_{Molke}$ ausgedrückt ins Verhältnis gesetzt zur Differenz der Trockenmasse TM1 des eingesetzten Ausgangsproduktes, z.B. Magermilch oder Kesselmilch, hier als $c_{Ausgangsstoff}$ ausgedrückt und der Trockenmasse TM2 der Molke, was anschließend mit dem Düsendurchsatz multipliziert wird.

Diese Berechnung beruht auf der Annahme, den Düsendurchsatz genau zu kennen. Die Praxis hat gezeigt, dass dieses Vorgehen einen guten ersten Indikator für die benötigte Zulaufmenge gibt, diese jedoch nach Beprobung des Quarks im Regelfall angepasst werden muss.

$$\dot{m}_{Zulauf} = \dot{m}_{D\ddot{u}sen} * \frac{c_{Konzentrat} - c_{Molke}}{c_{Ausgangsprodukt} - c_{Molke}} \quad \text{(Formel 1)}$$

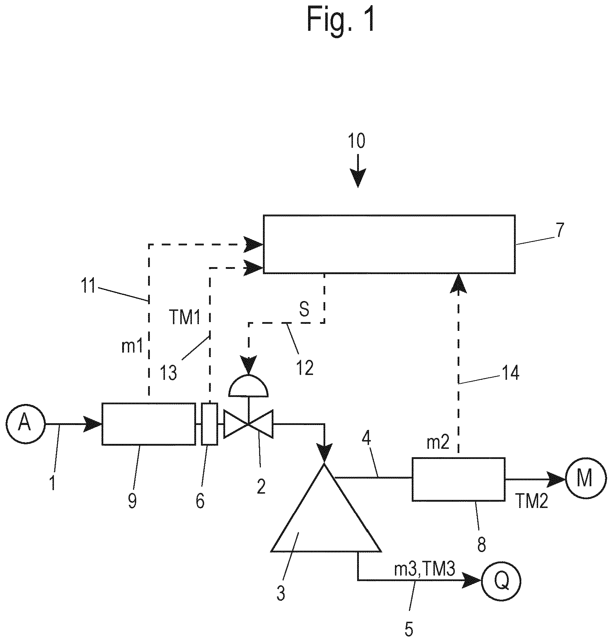

Das nachfolgend beschriebene Verfahren und die entsprechend ausgelegte Vorrichtung kompensiert die Unsicherheit des unbekannten Düsendurchsatzes, indem dieser über die Differenz der Massenströme des Ausgangsproduktes zum Separator und der Molke gemessen wird. Hierfür werden Massedurchflussmesser im Zulauf und im Ablauf der Molke eingesetzt (siehe Abb. 1). Der Düsenaustrag wird anhand von (Formel 2) berechnet, wobei zu berücksichtigen ist, dass die gemessenen Werte für vorzugsweise ca. 60 Sekunden geglättet werden sollten, um einen möglichst konstanten Düsenaustrag bestimmen zu können.

$$\dot{m}_{D\ddot{u}sen} = \dot{\overline{m}}_{Zulauf} - \dot{\overline{m}}_{Molke} \text{ (Formel 2)}$$

Die Striche innerhalb der Formel stehen dabei für die Angabe der Glättung bzw. der Mittelwert-Bildung über einen bestimmten Zeitraum, z.B. 60 Sekunden. Entsprechende Bezeichnungen zur Angabe von Mittelwerten sind dem Fachmann aus der Literatur bekannt.

Das in den Fig. 1 dargestellte Ausführungsbeispiel zeigt schematisch eine Vorrichtung mit einem Düsenseparator 3, vorzugsweise mit einem nicht näher dargestellten Tellerpaket, sowie mit einer ebenfalls nicht im Detail dargestellten rotierbar-gelagerten Trommel, welche ein Trommelvolumen aufweist. Die Trommel kann eine vertikale Drehachse aufweisen. Der Separator 3 weist ein Trommelvolumen auf. Dieses Trommelvolumen ergibt sich aus den bauartbedingten Vorgaben des Separators 3 und definiert zugleich eine Totzeit.

Die Vorrichtung 10 weist eine Zulaufleitung 1 zum Düsenseparator 3 auf, entlang welcher ein Regelorgan 2 angeordnet ist. Ebenfalls entlang der Zulaufleitung 1 ist ein Durchflussmessgerät 9 angeordnet.

Ein Ausgangsprodukt A, vorzugsweise Magermilch oder dickgelegte Kesselmilch wird in den Düsenseparator 3 geleitet, in dem das Ausgangsprodukt in Molke M als Flüssigkeitsphase und Quark Q als (Feststoff-)Konzentrat getrennt wird. Während die Molke über die Ablaufleitung 4 aus dem Düsenseparator 3 abgeleitet wird, wird das Konzentrat Q über Düsen durch die Ablaufleitung 5 ausgetragen. Die Ableitung des Konzentrats kann dabei kontinuierlich erfolgen. Das Konzentrat Q kann sodann weiterverarbeitet und beispielsweise gekühlt werden.

In der erfindungsgemäßen Vorrichtung ist ein Durchflussmessgerät 8, bzw. zumindest der Messaufnehmer eines Durchflussmessgerätes, in bzw. entlang der Ablaufleitung 4 der Molke M angeordnet. Der Durchfluss der Molke M aus dem Düsenseparator 3 kann z.B. als Massenstrom ermittelt werden. Die von den Durchflusssensoren 8 und 9 erfassten Messwerte und der Messwert des Messgeräts 6 zur Ermittlung des Trockenmassegehalts werden direkt über die Signalleitungen 11, 13, 14 an eine Steuer- und/oder Auswerteeinheit 7 übermittelt, wo der Durchflussmesswert als Regelgröße genutzt wird, um eine Stellgröße S zu bestimmen, welche dazu verwendet wird, um über eine Signalleitung 12 zwischen der Steuer- und/oder Auswerteeinheit 7 und dem Regelorgan 2 das Regelorgan 2 einzustellen.

Die Einstellung des Trockenmassegehalts nach dem vorliegenden Verfahren erfolgt derart, dass der Durchfluss, insbesondere der Massedurchfluss bzw. Massenstrom, an Molke M in der Ablaufleitung 4 der leichten Phase ermittelt wird. Bei der Quarkherstellung ist die leichte Phase die Molke. Die Molke M weist dabei aufgrund der Trennung im Separator stets annähernd den gleichen Trockenmassegehalt auf und kann somit als konstant angenommen werden.

Darüber hinaus wird der Massenstrom in der Zulaufleitung ermittelt. Dieser variiert auch mit dem Trockenmassegehalt des Ausgangsproduktes. Da das zugeführte Ausgangsprodukt zum Teil stark schwankenden Trockenmassegehalt aufweisen kann, wird auch das Konzentrat einen entsprechend schwankenden Trockenmassegehalt aufweisen. Entsprechend ist der Betrieb des Separators und die Zulaufmenge durch die Steuer- und/oder Auswerteeinheit einzustellen.

Sollte beispielsweise ein Ausgangsprodukt mit zu wenig Trockenmasse dem Separator 3 zugeführt werden, so muss das Regelorgan 2, z.B. ein Regelventil, weiter geöffnet werden, damit mehr Trockenmasse in den Separator gelangt und eine hinreichende Menge an Konzentrat Q vor den Düsen des Separators steht.

Durch eine geregelte, automatische Erhöhung und Verringerung der Zulaufleistung des Düsenseparators in Abhängigkeit von der Durchflussbilanzierung des zugeführten Ausgangsproduktes und der abgeführten Molke erfolgt für den Quark eine Einstellung auf die gewünschte Trockenmasse. Eine höhere Zulaufleistung bewirkt einen Anstieg der Trockenmasse und umgekehrt.

Geeignete Messgeräte, insbesondere zur Ermittlung des Massenstromes des Ausgangsproduktes und der Molke sind Coriolis-Durchflussmesser. Es ist auch möglich, eine Kombination aus Volumenstrommessgerät und Dichtemessgerät zur Ermittlung eines Massenstromes zu nutzen, wenngleich diese weniger bevorzugt sind.

Im Zulauf des Ausgangsproduktes A kann zudem ein Sensor als Messaufnehmer eines Messgerätes 6 zur Ermittlung des Trockenmassegehaltes des Ausgangsproduktes angeordnet sein. Ein solcher Sensor kann beispielsweise ein Sensor basierend auf einer Messung elektromagnetischer Wellen sein. Entsprechende Sensoren zur Feuchtemessung sind z.B. Mikrowellen-Messgeräte, Infrarot-Messgeräte, UV-Vis-Messgeräte und dergleichen. Hier sind vor allem auch die Messgeräte FT 120 bzw. FT 1 der Foss GmbH für flüssige Produkte zu nennen. Bevorzugt ist der entsprechende Sensor für die vorliegende Anmeldung Teil eines Inline-Messgeräts. Der Einsatz einer In-Line Messtechnik zur direkten Bestimmung der aktuellen Prozesszustände ermöglicht eine direkte Regelung. Die Anforderungen hierfür sind $\pm 0,1$ % Messgenauigkeit für die Trockenmasse. Mögliche Geräte hierfür sind die Mikrowellen Messung von Fa. Berthold und ProFoss.

Eine Messung der Trockenmasse vor allem in der Zulaufmilch in Kombination mit dem vorher beschriebenen System erlaubt eine automatische Prozesssteuerung bei verschiedenen (konzentrierten) Magermilchchargen. Die Messung der Trockenmasse der Zulaufmilch eliminiert zudem die Totzeit bis zur Einstellung der neuen Konzentration. Diese Messung im Zulauf zum Separator bietet sich zudem an, da die Trockenmasse dort durchaus fluktuieren kann (z.B. durch Sedimentation im Tank, Tankwechsel, etc.).

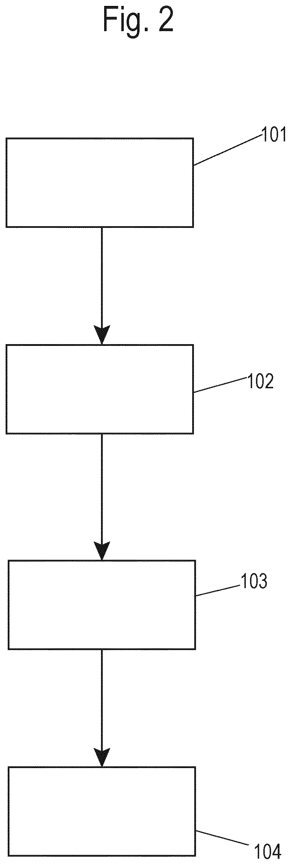

Fig. 2 zeigt nochmals die Schrittabfolge einer Variante des erfindungsgemäßen Verfahrens zur Regelung des Trockenmassegehalts von Konzentraten bei der Frischkäseherstellung, insbesondere bei der Speisequarkherstellung mittels der in Fig. 1 dargestellten Vorrichtung.

In einem ersten Schritt 101 wird ein Ausgangsprodukt A dem Düsenseparator 3 der Vorrichtung 10 zugeführt. Dies erfolgt über die in Fig. 1 dargestellte Zulaufleitung 1.

Dabei wird der Massenstrom ṁ1 des zugeleiteten Ausgangsproduktes A sowie der Trockenmassegehalt TM1 des Ausgangsproduktes ermittelt.

Im Düsenseparator 3 erfolgt in einem zweiten Schritt 102 eine Trennung in eine wässrige leichte Phase, der Molke M, und ein Feststoffkonzentrat Q, dem Quark, welcher bezogen auf die Molke M, die schwere bzw. schwerere Phase darstellt.

In einem dritten Schritt 103 erfolgt ein Ableiten der getrennten Phasen M und Q aus der Trenneinrichtung mittels getrennter Ablaufleitungen 4 und 5. Dabei wird der Massenstrom ṁ2 der leichten Phase, also der Molke M, gemessen.

Anhand des ermittelten Trockenmassegehalts TM1 und in Abhängigkeit der gemessenen Massedurchflüssen ṁ1 und ṁ2 erfolgt in einem vierten Schritt 104 eine Einstellung der Zulaufmenge an Ausgangsprodukt durch die Steuer- und/oder Auswerteeinheit 7 durch Generierung eines Steuersignals S und letztendlich dadurch auch eine Einstellung des Trockenmassegehalts TM3 im Feststoffkonzentrat Q, also dem Quark.

Die Messung erfolgt vorzugsweise kontinuierlich und ebenfalls vorzugsweise mit Hilfe von Massedurchfluss-Messgeräten jeweils in der Zulaufleitung 1 und in einer Ablaufleitung 4 aus dem Düsenseparator.

Der ermittelte Trockenmassegehalt des Ausgangsproduktes A dient als Regelgröße zur Einstellung eines geeigneten Massezulaufs m1 an Ausgangsprodukt A in Abhängigkeit von der Menge an ablaufender Molke M, wodurch ein beabsichtigter Trockenmassegehalt TM3 im Feststoff-Konzentrat Q einstellbar ist.

Aus den Massenströmen des Ausgangsproduktes m1 und der Molke ṁ2 kann der Massenstrom ṁ3 an Quark Q in der Ablaufleitung 5 berechnet werden und mittels der ermittelten Trockenmasse TM1 des Ausgangsproduktes A und bei bekannter und im Wesentlichen konstanter Trockenmasse TM2 der Molke M kann die Trockenmasse TM3 des Quarks berechnet werden. Dieser ermittelte Massenstrom ṁ3 in der Ablaufleitung 5 kann als Regelgröße zur Ermittlung einer Stellgröße S zur kontinuierlichen und automatischen Regelung der Zulaufmenge des Ausgangsproduktes verwendet wird.

Alternativ oder zur Redundanz kann der Trockenmassegehalt der Molke auch gemessen und in der Ermittlung in Schritt d verwendet werden.

In Bezug auf die EP 0 440 208 B1 handelt es sich im vorliegenden Fall um eine völlig andere Maschine, welche eine andere Trenncharakteristik aufweist.

Durch diese Verfahrensführung gibt es daher keine nennenswerte Totzeit und es wird einer Konzentrationsabweichung im Endprodukt voreilend entgegen gewirkt.

Eine Überwachung des Düsenverschleißes über den Anstieg der ermittelten Austragsmenge ṁ3 der Düsen ist möglich und es kann ein Hinweis für einen notwendigen Düsentausch generiert werden.

Eine Reduzierung des ermittelten Düsenaustrags ṁ3 während der Produktion kann zudem ein Indikator für eine blockierte Düse sein. Hier wäre zum Beispiel eine Änderung von

$$\Delta \dot{m}_{Düsen} > \frac{1}{12} \overline{\dot{m}_{Düsen}}$$

ein möglicher Grenzwert.

Anstelle der oder zusätzlich zur Trockenmasse kann auch die Masse des Eiweiß inline gemessen werden. Die Massenbilanz ist auch für Eiweiß gültig, damit wäre die Standardisierung des Konzentrates auch für Eiweiß möglich.

Bezugszeichen

1    Zulaufleitung
2    Regelorgan
3    Düsenseparator
4    Ablaufleitung (Molke)

| | |
|---|---|
| 5 | Ablaufleitung (Quark) |
| 6 | Messgerät (Trockenmassegehalt-Bestimmung) |
| 7 | Steuer- und/oder Auswerteeinheit |
| 8 | Durchflussmessgerät |
| 9 | Durchflussmessgerät |
| 10 | Vorrichtung |
| 11 | Signalleitung |
| 12 | Signalleitung |
| 13 | Signalleitung |
| 14 | Signalleitung |

| | |
|---|---|
| TM1 | Trockenmassegehalt Ausgangsprodukt |
| TM2 | Trockenmassegehalt Molke |
| TM3 | Trockenmassegehalt Quark |

| | |
|---|---|
| ṁ1 | Massenstrom bzw. Durchfluss des Ausgangsproduktes |
| ṁ2 | Massenstrom bzw. Durchfluss der Molke-Fraktion |
| ṁ3 | Massenstrom bzw. Durchfluss der Quark-Fraktion |

| | |
|---|---|
| A | Ausgangsprodukt |
| Q | Feststoffkonzentrat (Quark) |
| M | Molke |

| | |
|---|---|
| S | Stellgröße |

| | |
|---|---|
| 101 | erster Schritt (Zuführen + Messen - Ausgangsprodukt) |
| 102 | zweiter Schritt (Trennung der Fraktionen) |
| 103 | dritter Schritt (Messen - Molke) |
| 104 | vierter Schritt (Ermitteln TM-Gehalt - Quark) |

**Patentansprüche**

1. Verfahren zur Einstellung des Trockenmassegehaltes (TM3) in Quark (Q) in einer Vorrichtung (10) zur zentrifugalen Trennung eines Ausgangsproduktes (A) in Quark (Q) und Molke (M), wobei die Vorrichtung (10) einen Düsenseparator (3) aufweist und wobei das Verfahren die folgenden Schritte aufweist:

   a. Zuleiten (101) des Ausgangsproduktes (A) in einen Düsenseparator (3) der Vorrichtung (10) über eine Zulaufleitung (1) unter Ermittlung eines Gehaltes der Trockenmasse (TM1) und/oder des Eiweißes und Ermittlung, insbesondere Messung, des Massenstromes (ṁ1) des Ausgangsproduktes (A);
   b. Zentrifugale Trennung (102) des Ausgangsproduktes (A) durch den Düsenseparator (3) in eine Molkefraktion (M) und eine Quarkfraktion (Q);
   c. Getrenntes Ableiten der Molkefraktion (M) und der Quarkfraktion (Q) aus dem Düsenseparator (3) und Ermittlung (103), insbesondere Messung, des Massenstrom (m2) der Molkefraktion (M); und
   d. Einstellen (104) des Massenstromes (m1) an zugeleitetem Ausgangsprodukt (A) in Abhängigkeit der in Schritt a. und c. ermittelten Werte,
   wobei die Ermittlung des Trockenmassegehalts (TM3) und/oder des Eiweißgehalts der Quarkfraktion (Q) anhand des ermittelten Massenstromes (m1) des Ausgangsproduktes (A) und des Massenstromes (m2) der Molkefraktion (M) und des ermittelten Trockenmassegehalts (TM1) und/oder Eiweißgehalts des Ausgangsproduktes (A) erfolgt, wobei die Vorrichtung (10) ein Regelorgan (2) zur Einstellung des Massenstromes (m1) des Ausgangsproduktes (A) aufweist, welches entlang der Zulaufleitung (1) angeordnet ist,
   **dadurch gekennzeichnet, dass** die Masseströme (ṁ1, ṁ2) des in den Düsenseparator (3) eingeleiteten Ausgangsproduktes (A) und der abgeleiteten Molkefraktion (M) ermittelt werden und hieraus der Massenstrom (m3) in der Ablaufleitung (5) der Quarkfraktion (Q) berechnet wird und, dass dieser ermittelte Massenstrom (m3) in der Ablaufleitung (5) als Wert zur Ermittlung einer Stellgröße zur automatischen Regelung der Zulaufmenge des Ausgangsproduktes (A) verwendet wird.

2. Verfahren nach Anspruch 1, **dadurch gekennzeichnet, dass** eine Ermittlung des Massenstromes (m3) der Quarkfraktion (Q) anhand des ermittelten Massenstromes (ṁ1) des Ausgangsproduktes (A) und des Massenstromes (m2) der Molkefraktion (M) erfolgt.

3. Verfahren nach Anspruch 1 oder 2, **dadurch gekennzeichnet, dass** die Zeitdifferenz zwischen der Messung (101) des Trockenmassegehalts (TM1) oder Eiweißgehalts in Schritt a und eine Einstellung (104) des Massenstroms (rh1) in Schritt d. weniger als 2 min beträgt.

4. Verfahren nach einem der vorhergehenden Ansprüche, **dadurch gekennzeichnet, dass** die Masseströme (rh1, m2) des in den Düsenseparator (3) eingeleiteten Ausgangsproduktes (A) und der abgeleiteten Molkefraktion (M) kontinuierlich ermittelt werden und hieraus der Massenstrom (m3) in der Ablaufleitung (5) der Quarkfraktion (Q) berechnet wird und, dass dieser ermittelte Massenstrom (m3) in der Ablaufleitung (5) als Wert zur Ermittlung einer Stellgröße zur automatischen und kontinuierlichen Regelung der Zulaufmenge des Ausgangsproduktes (A) verwendet wird.

5. Verfahren nach einem der vorhergehenden Ansprüche, **dadurch gekennzeichnet, dass** das Ausgangsprodukt während der Quarkherstellung kontinuierlich dem Düsenseparator zugeführt wird und dass ein kontinuierliches Abführen von Molke und Quark erfolgt.

6. Verfahren nach einem der vorhergehenden Ansprüche, **dadurch gekennzeichnet, dass** die Ermittlung (104) in Schritt d unter der Annahme eines konstanten Trockenmassegehalts (TM2) an Molke (M) bei schwankender Trockenmasse (TM1) des Ausgangsproduktes (A) erfolgt.

7. Verfahren nach einem der vorhergehenden Ansprüche, **dadurch gekennzeichnet, dass** der Trockenmassegehalt (TM2) der Molke (M) gemessen wird und in der Ermittlung (104) in Schritt d verwendet wird.

8. Verfahren nach einem der vorhergehenden Ansprüche, **dadurch gekennzeichnet, dass** eine Verstopfung und/oder ein Verstopfungsgrad der Düsen des Düsenseparators anhand des ermittelten, insbesondere des berechneten und/oder gemessenen Massenstroms (m3) des Quarks ermittelt wird.

9. Vorrichtung (10) zur Herstellung von Quark umfassend einen Düsenseparator (3) und eine Steuer- und/oder Auswerteeinheit (7) die ausgerüstet ist zur Ausführung eines Verfahrens nach einem der vorhergehenden Ansprüche.

10. Vorrichtung nach Anspruch 9, **dadurch gekennzeichnet, dass** die Vorrichtung (10) eine Zulaufleitung (1) zur Zuleitung von Ausgangsprodukt (A) in den Düsenseparator (3) aufweist, sowie eine erste Ablaufleitung (4) zur Ableitung der Molke (M) aus dem Düsenseparator (3) und eine zweite Ablaufleitung (5) zur Ableitung von Quark (Q) aus dem Düsenseparator (3).

11. Vorrichtung nach einem der vorhergehenden Ansprüche 9 oder 10, **dadurch gekennzeichnet, dass** der Massenstrom (m2) der Molke (M) durch ein Durchflussmessgerät (8), insbesondere Coriolis-Durchflussmessgerät, ermittelt wird, wobei zumindest ein Messaufnehmer des Messgerätes (8) in oder entlang der ersten Ablaufleitung (4) angeordnet ist.

12. Vorrichtung nach Anspruch 11, **dadurch gekennzeichnet, dass** der Massenstrom (rh1) des Ausgangsproduktes (A) durch ein Durchflussmessgerät (9), insbesondere Coriolis-Durchflussmessgerät, ermittelt wird, wobei zumindest ein Messaufnehmer des Messgerätes (9) in oder entlang der Zulaufleitung (1) angeordnet ist.

13. Vorrichtung nach Anspruch 11 oder 12, **dadurch gekennzeichnet, dass** der Trockenmassegehalt (TM1) und/oder der Eiweißgehalt durch ein Messgerät (6) mit einem Messaufnehmer zum Aussenden und/oder Empfangen von elektromagnetischer Strahlung, insbesondere durch eine Mikrowellen-Messung oder eine Infrarot-Messung, insbesondere NIR-Messung, ermittelt wird, wobei zumindest der Messaufnehmer des Messgerätes (6) in oder entlang der Zulaufleitung (1) angeordnet ist.

14. Vorrichtung nach einem der vorhergehenden Ansprüche, **dadurch gekennzeichnet, dass** die Vorrichtung (10) das Regelorgan (2) als ein Regelventil ausgebildet ist.

**Claims**

1. Method for adjusting the dry matter content (DM3) in curd (Q) in a device (10) for centrifugally separating a starting product (A) into curd (Q) and whey (M), wherein the device (10) comprises a nozzle separator (3) and wherein the method is **characterized by the following steps:**

   a. feeding (101) the starting product (A) into a nozzle separator (3) of the device (10) via a feed line (1) while determining a content of dry matter (DM1) and/or protein, and determining, in particular measuring, the mass flow ($\dot{m}1$) of the starting product (A);

   b. centrifugal separation (102) of the starting product (A) by the nozzle separator (3) into a whey fraction (M) and a curd fraction (Q);

   c. separate discharge of the whey fraction (M) and the curd fraction (Q) from the nozzle separator (3) and determination (103), in particular measurement, of the mass flow ($\dot{m}2$) of the whey fraction (M); and

   d. adjusting (104) the mass flow ($\dot{m}1$) of supplied starting product (A) as a function of the values determined in steps a and c,

   wherein a determination of the dry matter content (DM3) and/or the protein content of the curd fraction (Q) is carried out on the basis of the determined mass flow (rh1) of the starting product (A) and the mass flow (m2) of the whey fraction (M) and the determined dry matter content (DM1) and/or protein content of the starting product (A) **characterized in that** the mass flows ($\dot{m}1$, $\dot{m}2$) of the starting product (A) introduced into the nozzle separator (3) and of the whey fraction (M) discharged are determined and the mass flow ($\dot{m}3$) in the discharge line (5) of the curd fraction (Q) is calculated therefrom and, **in that** this determined mass flow ($\dot{m}3$) in the discharge line (5) is used as a value for determining a manipulated variable for automatically controlling the feed quantity of the output product (A) and wherein the device (10) has a control element (2) for setting the mass flow (rh1) of the output product (A), which is arranged along the feed line (1).

2. Method according to claim 1, **characterized in that** a determination of the mass flow ($\dot{m}3$) of the curd fraction (Q) is carried out on the basis of the determined mass flow (rh1) of the starting product (A) and the mass flow (m2) of the whey fraction (M).

3. Method according to one of the preceding claims 1 or 2, **characterized in that** the time difference between the measurement (101) of the dry matter content (DM1) or protein content in step a and an adjustment (104) of the mass flow rate ($\dot{m}1$) in step d is less than 2 min.

4. Method according to one of the preceding claims, **characterized in that the** mass flows ($\dot{m}1$, $\dot{m}2$) of the starting product (A) introduced into the nozzle separator (3) and of the whey fraction (M) discharged are determined, continuously, and from this the mass flow ($\dot{m}3$) in the discharge line (5) of the curd fraction (Q) is calculated, and, **in that** this determined mass flow ($\dot{m}3$) in the discharge line (5) is used as a value for determining a manipulated variable for automatic, and continuous, regulation of the feed quantity of the starting product (A).

5. Method according to one of the preceding claims, **characterized in that** the starting product is continuously fed to the nozzle separator during curd production and that continuous discharge of whey and curd takes place.

6. Method according to one of the preceding claims, **characterized in that** the determination (104) in step d is carried out assuming a constant dry matter content (DM2) of whey (M) while the dry matter (DM1) of the starting product (A) varies.

7. Method according to one of the preceding claims, **characterized in that** the dry matter content (DM2) of the whey (M) is measured and used in the determination (104) in step d.

8. Method according to one of the preceding claims, **characterized in that** a clogging and/or a degree of clogging of the nozzles of the nozzle separator is determined on the basis of the determined, preferably calculated and/or measured mass flow ($\dot{m}3$) of the curd.

9. Device (10) for producing curd comprising a nozzle separator (3) and a control and/or evaluation unit (7) which is equipped for carrying out a method according to one of the preceding claims.

10. Device according to claim 9, **characterized in that** the device (10) comprises a feed line (1) for feeding starting product (A) into the nozzle separator (3), as well as a first discharge line (4) for discharging whey (M) from the nozzle separator (3) and a second discharge line (5) for discharging curd (Q) from the nozzle separator (3).

11. Device according to one of the preceding claims 9 or 10, **characterized in that** the mass flow (m2) of the whey (M) is determined by a flowmeter (8), in particular a Coriolis flowmeter, wherein at least one measuring sensor of the measuring device (8) is arranged in or along the first discharge line (4).

12. Device according to claim 11, **characterized in that** the mass flow (ṁ1) of the starting product (A) is determined by a flowmeter (9), in particular a Coriolis flowmeter, wherein at least one measuring sensor of the measuring device (9) is arranged in or along the feed line (1).

13. Device according to claim 11 or 12, **characterized in that** the dry matter content (DM3) and/or the protein content is determined by a measuring device (6) having a measuring sensor for emitting and/or receiving electromagnetic radiation, in particular by a microwave measurement or an infrared measurement, in particular NIR measurement, wherein at least the measuring sensor of the measuring device (6) is arranged in or along the feed line (1).

14. Device according to one of the preceding claims, **characterized in that** the device (10) comprises the regulating element (2) designated as a regulating valve.

**Revendications**

1. Procédé pour l'ajustement de la teneur en matière sèche (TM3) dans du quark (Q) dans un dispositif (10) pour la séparation centrifuge d'un produit de départ (A) en quark (Q) et petit-lait (M), le dispositif (10) comportant un séparateur à buses (3) et le procédé comprenant les étapes suivantes :

   a. introduction (101) du produit de départ (A) dans un séparateur à buses (3) du dispositif (10) via une conduite d'arrivée (1) avec détermination de la matière sèche (TM1) et/ou des protéines et détermination, en particulier mesure, du débit massique (ṁ1) du produit de départ (A) ;
   b. séparation centrifuge (102) du produit de départ (A) en une fraction de petit-lait (M) et une fraction de quark (Q) par le séparateur à buses (3) ;
   c. extraction séparée de la fraction de petit-lait (M) et de la fraction de quark (Q) hors du séparateur à buses (3) et détermination (103), en particulier mesure, du débit massique (ṁ2) de la fraction de petit-lait (M) ; et
   d. ajustement (104) du débit massique (ṁ1) du produit de départ (A) amené en fonction des valeurs déterminées dans les étapes a et c,
   la détermination de la teneur en matière sèche (TM3) et/ou de la teneur en protéines de la fraction de quark (Q) étant effectuée à l'aide du débit massique (ṁ1) déterminé du produit de départ (A) et du débit massique (ṁ2) de la fraction de petit-lait (M) et de la teneur en matière sèche (TM1) déterminée et/ou de la teneur en protéines du produit de départ (A), le dispositif (10) comportant un organe de régulation (2) pour le réglage du débit massique (ṁ1) du produit de départ (A), qui est disposé le long de la conduite d'arrivée (1),
   **caractérisé en ce que** les débits massiques (ṁ1, ṁ2) du produit de départ (A) introduit dans le séparateur à buses (3) et de la fraction de petit-lait (M) extraite sont déterminés et le débit massique (ṁ3) dans la conduite d'extraction (5) de la fraction de quark (Q) est déterminé sur cette base, et **en ce que** ce débit massique (ṁ3) déterminé dans la conduite d'extraction (5) est utilisé comme valeur pour déterminer une grandeur de réglage d'une régulation automatique de la quantité amenée du produit de départ (A).

2. Procédé selon la revendication 1, **caractérisé en ce que** le débit massique (ṁ3) de la fraction de quark (Q) est déterminé à l'aide du débit massique (ṁ1) déterminé du produit de départ (A) et du débit massique (ṁ2) de la fraction de petit-lait (M).

3. Procédé selon la revendication 1 ou 2, **caractérisé en ce que** l'écart dans le temps entre la mesure (101) de la teneur en matière sèche (TM1) ou d'une teneur en protéines dans l'étape a et un ajustement (104) du débit massique (ṁ1) dans l'étape d dure moins de 2 minutes.

4. Procédé selon l'une des revendications précédentes, **caractérisé en ce que** les débits massiques (ṁ1, ṁ2) du produit de départ (A) introduit dans le séparateur à buses (3) et de la fraction de petit-lait (M) extraite est déterminé en continu et utilisé pour calculer le débit massique (ṁ3) dans la conduite d'extraction (5), et **en ce que** ce débit massique (ṁ3) déterminé dans la conduite d'extraction (5) est utilisé comme valeur pour déterminer une grandeur de réglage pour la régulation automatique et continue de la quantité amenée du produit de départ (A).

**5.** Procédé selon l'une des revendications précédentes, **caractérisé en ce que** le produit de départ est amené de façon continue au séparateur à buses pendant la fabrication du quark et **en ce que** le petit-lait et le quark sont extraits de façon continue.

**6.** Procédé selon l'une des revendications précédentes, **caractérisé en ce que** la détermination (104) de l'étape d est effectuée en supposant une teneur en matière sèche (TM2) constante de petit-lait (M) avec une matière sèche (TM1) fluctuante du produit de départ (A).

**7.** Procédé selon l'une des revendications précédentes, **caractérisé en ce que** la teneur en matière sèche (TM2) du petit-lait (M) est mesurée et utilisée dans la détermination (104) de l'étape d.

**8.** Procédé selon l'une des revendications précédentes, **caractérisé en ce qu'**un colmatage et/ou un degré de colmatage des buses du séparateur à buses sont déterminés à l'aide du débit massique ($\dot{m}$3) du quark déterminé, en particulier calculé et/ou mesuré.

**9.** Dispositif (10) pour la fabrication de quark comprenant un séparateur à buses (3) et une unité de commande et/ou d'analyse (7) qui est équipée pour exécuter un procédé selon l'une des revendications précédentes.

**10.** Dispositif selon la revendication 9, **caractérisé en ce que** le dispositif (10) comporte une conduite d'arrivée (1) pour amener du produit de départ (A) dans le séparateur à buses (3), ainsi qu'une première conduite d'extraction (4) pour extraire du petit-lait (M) hors du séparateur à buses (3) et une deuxième conduite d'extraction (5) pour extraire du quark (Q) hors du séparateur à buses (3).

**11.** Dispositif selon l'une des revendications 9 ou 10, **caractérisé en ce que** le débit massique ($\dot{m}$2) du petit-lait (M) est déterminé par un appareil de mesure du débit (8), en particulier un débitmètre à effet Coriolis, au moins un capteur de mesure de l'appareil de mesure (8) étant disposé dans ou le long de la première conduite d'extraction (4).

**12.** Dispositif selon la revendication 11, **caractérisé en ce que** le débit massique ($\dot{m}$1) du produit de départ (A) est déterminé par un appareil de mesure du débit (9), en particulier un débitmètre à effet Coriolis, au moins un capteur de mesure de l'appareil de mesure (9) étant disposé dans ou le long de la conduite d'arrivée (1).

**13.** Dispositif selon la revendication 11 ou 12, **caractérisé en ce que** la teneur en matière sèche (TM1) et/ou la teneur en protéines sont déterminées avec un appareil de mesure (6) muni d'un capteur de mesure destiné à émettre et/ou à recevoir un rayonnement électromagnétique, en particulier par une mesure par micro-ondes ou une mesure par infrarouges, en particulier une mesure par dans le proche infrarouge, le capteur de mesure de l'appareil de mesure (6), au minimum, étant disposé dans ou le long de la conduite d'arrivée (1).

**14.** Dispositif selon l'une des revendications précédentes, **caractérisé en ce que** le dispositif (10) l'organe de régulation (2) est conformé comme une vanne de régulation.

# Fig. 1

# Fig. 2

**EP 4 070 651 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004035215 A1
- EP 0440208 B1
- DE 3238462 A1
- DD 277583 A3

14